# EUROPEAN PATENT SPECIFICATION

(11) **EP 3 198 542 B1**
(45) Date of publication and mention of the grant of the patent: **11.03.2020**
(21) Application number: 15844953.8
(22) Date of filing: 22.09.2015
(51) Int. Cl.: G06Q 30/00, H04W 4/029, G06Q 30/02, H04W 4/021, H04W 4/80, G06Q 10/00

(54) **DELIVERY OF CONTEXT-SPECIFIC CONTENT TO A MOBILE DEVICE, TRIGGERED BY CHANGES IN THE MOBILE DEVICE'S LOCATION**
BEREITSTELLUNG VON KONTEXTSPEZIFISCHEN INHALTEN AN EINE MOBILE VORRICHTUNG, AUSGELÖST DURCH ÄNDERUNG DES STANDORTES DER MOBILEN VORRICHTUNG
PROCÉDÉ DE LIVRAISON DE CONTENU SPÉCIFIQUE AU CONTEXTE, À UN DISPOSITIF MOBILE, DÉCLENCHÉE PAR DES CHANGEMENTS DE POSITION DU DISPOSITIF MOBILE

(30) Priority: 22.09.2014 US 201462053783 P; 22.09.2014 US 201462053779 P; 09.09.2015 US 201562216358 P
(43) Date of publication of application: 02.08.2017
(73) Proprietor: Moovel North America, LLC, Portland, Oregon 97205 (US); Babb, Zachary, Portland, Oregon 97205 (US); Rotter, Matthew, Portland, Oregon 97205 (US); Gray, Michael, Portland, Oregon 97205 (US); Peter, Alexandra, Portland, Oregon 97205 (US); Parker, Nathaniel, Portland, Oregon 97205 (US); Schaus, Scott, Portland, Oregon 97205 (US)
(72) Inventor: BABB, Zachary, Portland, Oregon 97205 (US); ROTTER, Matthew, Portland, Oregon 97205 (US); GRAY, Michael, Portland, Oregon 97205 (US); PETER, Alexandra, Portland, Oregon 97205 (US); PARKER, Nathaniel, Portland, Oregon 97205 (US); SCHAUS, Scott, Portland, Oregon 97205 (US)
(74) Representative: HGF Limited
(86) International application number: PCT/US2015/051564
(87) International publication number: WO 2016/049093

(56) References cited:
- WO-A1-2013/052316
- WO-A1-2013/127077
- US-A1- 2010 174 607
- US-A1- 2010 262 449
- US-A1- 2012 004 961
- US-A1- 2014 087 760
- US-A1- 2014 135 042
- US-A1- 2014 267 399

## Description

### TECHNICAL FIELD

Embodiments of the present disclosure generally relate to systems and methods for a platform that provides context-specific content to mobile devices of end users. In particular, embodiments of the present disclosure relate to systems and methods for associating and delivering context-aware content to mobile devices via a programmable trigger that is based upon changes in the mobile device's location.

### BACKGROUND

Traditionally, users of mobile devices who wish to obtain information relating to some topic of interest have to send requests to an information provider to receive information on their mobile devices. The requested information might pertain to a user's geographical location. For example, a user may request transit-related information to learn when the next train or bus will arrive. Upon receiving the user's request for transit-related information, the relevant transit agency or third party information provider responds to the user by transmitting the requested information. As another example, a user might use a mobile device to seek information about an establishment, such as a store or restaurant, located in the user's vicinity. The user might be interested in checking for information, such as hours of operation, or for advertisements, such as coupons or discounts. The user can operate the mobile device to access the establishment's website and then navigate the website to receive the desired information or advertisement.

It would be desirable to facilitate the user's ability to retrieve information easily and quickly, without having to specifically request it. This can include transit-related information and context-specific content relevant to a user's geographical location.

WO2013/127077 discloses an approach for providing hub-based indexing and services. WO2013/052316 discloses systems and methods for delivering context-sensitive dynamic mobile advertisements. US2012/004961 discloses a system for providing targeted advertising information based on the context of provided transportation information.

### SUMMARY

The following discloses a method for delivering targeted marketing content to users by a server, according to independent claim 1. Dependent claims constitute embodiments of the invention. The embodiments of the following description which are not covered by the appended claims are considered as not being part of the present invention.

### BRIEF DESCRIPTION OF DRAWINGS

FIG. 1A is a schematic diagram of an example network utilizing a DCMS server for communicating with mobile devices that interact with beacons, in accordance with embodiments of the present disclosure.
FIG. 1B illustrates steps of a method implemented at a DCMS server for delivering content to a user's mobile device after a trigger has been activated, in accordance with embodiments of the present disclosure.
FIG. 2 illustrates an exemplary graphical user interface generated by a DCMS server for a merchant to configure a beacon deployed at a location, in accordance with embodiments of the present disclosure.
FIG. 3 illustrates an exemplary graphical user interface generated by a DCMS server for a merchant to configure a geofence deployed at a location, in accordance with embodiments of the present disclosure.
FIGS. 4-6 illustrate exemplary screenshots provided by a DCMS server to a merchant for creating/editing/reviewing marketing campaigns, in accordance with embodiments of the present disclosure.
FIG. 7 illustrates an exemplary screenshot provided to a merchant for managing various marketing campaigns for which the merchant is utilizing the DCMS, in accordance with embodiments of the present disclosure.
FIG. 8 illustrates several screenshots of a mobile device displaying real-time transit information, in accordance with embodiments of the present disclosure.
FIG. 9 illustrates a screenshot of a mobile device displaying a targeted marketing deal to an end user, in accordance with embodiments of the present disclosure.
FIG. 10 illustrates actions taken by a widget embedded in a mobile application program to receive targeted marketing offers from a DCMS server, in accordance with embodiments of the present disclosure.
FIG. 11 illustrates exemplary system components and data items in connection with the DCMS server facilitating delivery of targeted marketing offers to users, in accordance with embodiments of the present disclosure.
FIGS. 12-13 illustrate user interface screenshots of a mobile application for engagement of users with various merchant-related activities, in accordance with embodiments of the present disclosure.
FIG. 14 illustrates a sequence of intermediate states between a merchant defining a marketing campaign and a merchant validating a deal redeemed by a user, in accordance with embodiments of the present disclosure.
FIGS. 15-18 illustrate screenshots showing exemplary DCMS interfaces for merchants to define or configure their marketing programs, in accordance with embodiments of the present disclosure.
FIG. 19 illustrates an exemplary DCMS interface for personnel associated with a transit agency to approve one or more marketing campaigns / offers provided by merchants, in accordance with embodiments of the present disclosure.
FIG. 20 illustrates a DCMS interface displaying exemplary analytics associated with a marketing campaign, as viewed by a merchant, in accordance with embodiments of the present disclosure.
FIG. 21 illustrates a sequence diagram showing interactions among the various components of the overall system in a scenario wherein a user is presented with an option to purchase a mobile ticket via a third party server, in accordance with embodiments of the present disclosure.
FIG. 22 illustrates several screenshots of a user's mobile device displaying real-time transit information and in connection with a user purchasing a ticket from a third party server different than the transit agency, in accordance with embodiments of the present disclosure.

### DETAILED DESCRIPTION

Aspects of the present disclosure use programmable triggers (or simply, triggers) to identify a user's location when a user is approaching or arrives at a certain geographical location. Content (e.g., in the form of text, graphics, audio, video or any combination of media) that is relevant to the user's context, such as the user's geographical location, the time of day, etc., is then delivered to the user. Various tools can be used to create triggers by which a user's mobile device requests context-specific information, including a beacon, a geofence, a network subnet, a network subnet, a WiFi network, or even a user's behavioral action (such as a fixed number of steps taken by a user when the user is moving), etc.

A beacon is an electronic device that transmits a signal allowing a user's mobile device to receive certain information and determine its proximity to the source of the beacon. For example, as a user approaches a bus stop, a beacon located at the bus stop can provide information to a user's mobile device indicating to the mobile device is approaching the beacon. Beacons can transmit various types of signals, such as a Bluetooth Low Energy signal, an audio signal etc. A beacon utilizing Bluetooth Low Energy signal is called a BLE beacon. After receiving a signal transmitted from a beacon, a user's mobile device can be configured to contact a server associated with the beacon and provide information identifying the user's mobile device.

Before a mobile device reacts to a beacon, the mobile device user may first perform a one-time registration process to authorize the user's mobile device to interact with a beacon at a geographical location. Subsequently, a mobile application program (on the user's mobile device) determines which beacon(s) will interact with the user's mobile device.

In addition to triggers that are sensed automatically, a trigger can also be sensed manually. For example, a mobile device user can scan the mobile device using a NFC reader or a QR reader, which causes the mobile device to contact a server and pass along information pertaining to the user's location. The server then can send customized information based on context, including the location and time of the request, and possibly also based on the user's profile.

In an exemplary scenario, embodiments of the present disclosure comprise a server that delivers content (e.g., in the form of text, graphics, audio, video or any combination of media) to mobile devices when a respective user is at a certain geographical location. The content delivered is associated with a context of the user's location. For example, the server can deliver information about real-time transit arrivals to a user's mobile device when the user is nearing a bus stop. Additionally, in some embodiments, the server can provide targeted marketing deals to a user, delivered either as a stand-alone deal, or in conjunction with other information (e.g., transit information). In yet some other embodiments, the server can also deliver visually validated mobile tickets, in accordance with the disclosure provided in U.S. Patent Publication No. 2014/0095227. Such tickets can be applied for one-time use, weekly use, monthly use, etc.

As another example, the server can provide location-based information about vehicle parking lot facilities, e.g., number of vacant spots, number of reserved spots, price of parking by the hour or day, etc. The system can also generate parking tickets/passes and validate such tickets/passes in various scenarios.

A server designed and constructed in accordance with aspects of the present disclosure is referred to herein as a Dynamic Content Management Server (DCMS). It will be understood that the term "server" or "DCMS server" can be construed to mean a single server or a plurality of interconnected servers that are configured to exchange information. Further, such a server or a plurality of servers can be cloud-based or can be physical servers.

In some embodiments, information relating to a user's location (e.g., geographical coordinates, time of day, etc.) can be used as a trigger for the delivery of content delivered to a user. In the above example, when the user is approaching a bus stop, the user's mobile device can interact with one or more trigger-based tracking devices (e.g., Bluetooth beacons, NFC readers, QR readers, etc.) mounted at a bus stop. In general, it will be understood that such tracking devices can be attached to any object at any physical location, (e.g., a parking lot, a railway station, a movie theater, a stadium, a concert venue, etc.). Tracking devices such as Bluetooth Low Energy beacons may broadcast periodic packets of information that can be received at a user's mobile device. It will be understood that the tracking devices can be owned and operated by the entity that operates the DCMS server described herein, or alternatively, can be owned by a third party. Although in the discussions herein, the term "beacon" is used, this term generally refers to a tracking device. Furthermore, it will be understood that the beacon information request can include one or more beacons. Also, beacons can be configured in various modes, e.g., NFC, Bluetooth, etc.

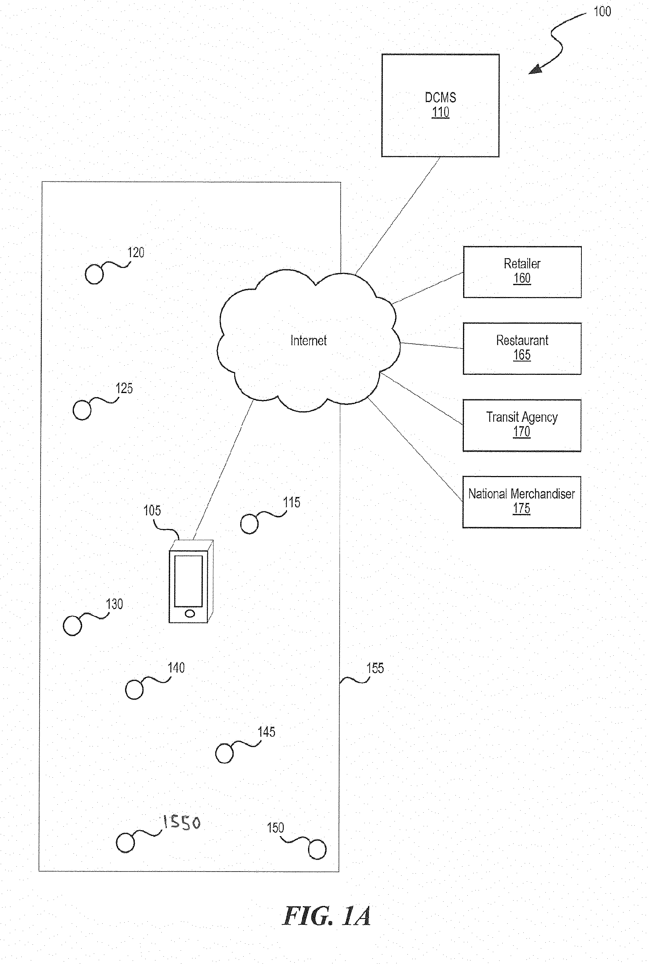

FIG. 1A is a schematic representation of an example network 100 in which user's mobile device 105 interacts with DCMS 110 to receive context-specific information. As shown in network in FIG. 1A, a plurality of beacons 115, 120, 125, 130, 140, 145, 150, 1550 are physically located in metropolitan area 155. Each beacon is physically positioned at a different location, for example, at the entrance of a transit station, restaurant, retailer store, or parking lot, at a street corner bus stop, etc. The DCMS 110 is configured to perform services, such as transmitting information, coupons, or other data, to authorized mobile devices as they approach a beacon, based upon programming that is associated with that beacon.

The programming is customized based on merchandising campaigns run by merchants (including businesses, agencies, government entities, or other sponsors), such as Retailer 160, Restaurant 165, Transit Agency 170, and National Merchandiser 175. As one example, Retailer 160, which has a store located near beacon 120, creates an advertising campaign via DCMS 110 that provides coupons to the screens of users' mobile devices when users approach the store during certain hours. As a second example, Transit Agency 170, which operates a train station in which beacon 140 is located at the entrance, utilizes DCMS 110 to provide train arrival times to the screens of users' mobile devices when users with accounts with Transit Agency 170 enter the station. As yet another example, National Merchandiser 175, which markets a bottled sports drink that is sold in establishments throughout the country, utilizes DCMS 110 to send advertisements to the screens of users' mobile devices located near beacons positioned at athletic fields in Metropolitan area 155, between the hours of noon and 4pm when the temperatures are above 90 degrees.

In this example in FIG. 1A, the user's mobile device 105 approaches beacon 115 within metropolitan area 155. The beacon emits a signal (e.g., a Bluetooth low energy signal) detected by the user's mobile device 105. The user's mobile device is configured such that, upon detecting the beacon's signal, it sends a request to DCMS 110 via the Internet (the intermediate communications between the user's mobile device and the Internet are not shown). The request received by DCMS 110 includes information identifying the user's mobile device 105 and the beacon 115. Based on this data, and possibly additional information such as the time of day, the user's purchase history, etc., the DCMS 110 transmits data back to user's mobile device 105 based on a program devised by one of the sponsors (160, 165, 170, 175), which is running a marketing campaign associated with beacon 115.

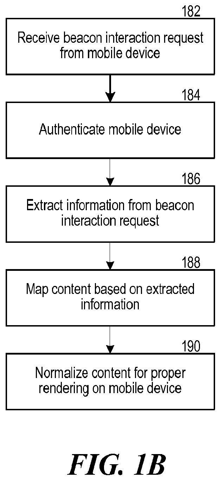

FIG. 1B illustrates steps of a method implemented at a DCMS server for delivering content to a user's mobile device after a trigger (based on NFC, QR, WiFi, etc.) has been activated. A user may go through a registration process to provide approval to receive content via the DCMS server. Once registered, a trigger is activated when the user is in close proximity to a beacon location. In other words, a user's mobile device receives communication from the beacon that includes a beacon interaction request when the user is in close proximity to a beacon location. This beacon interaction request is then passed on to a DCMS server by the user's mobile device. Steps related to the functionality of a DCMS server starting with processing a beacon interaction request and eventually delivering content to the user's mobile device are explained in detail below.

A DCMS server receives a beacon interaction request from the user's mobile device, at step 182. For example, the beacon information request can include identifying information such as a beacon ID, a beacon major ID, and a beacon minor ID. In some embodiments, upon receiving the request, the server first authenticates a user's mobile device, at step 184, before performing further processing. For example, although a user's mobile device may be valid, authentication may fail if the device has been reported as lost or stolen to the entity that owns and operates the DCMS. In that instance, the respective mobile device is blocked from receiving content.

Upon successful authentication, the server extracts information from the received beacon interaction request, at step 186. Along with the beacon identifier, the beacon information request received at a DCMS server from a user's mobile device also includes information identifying the user's mobile device. This may include the user's mobile device type, operating system type, operating system version, and the like.

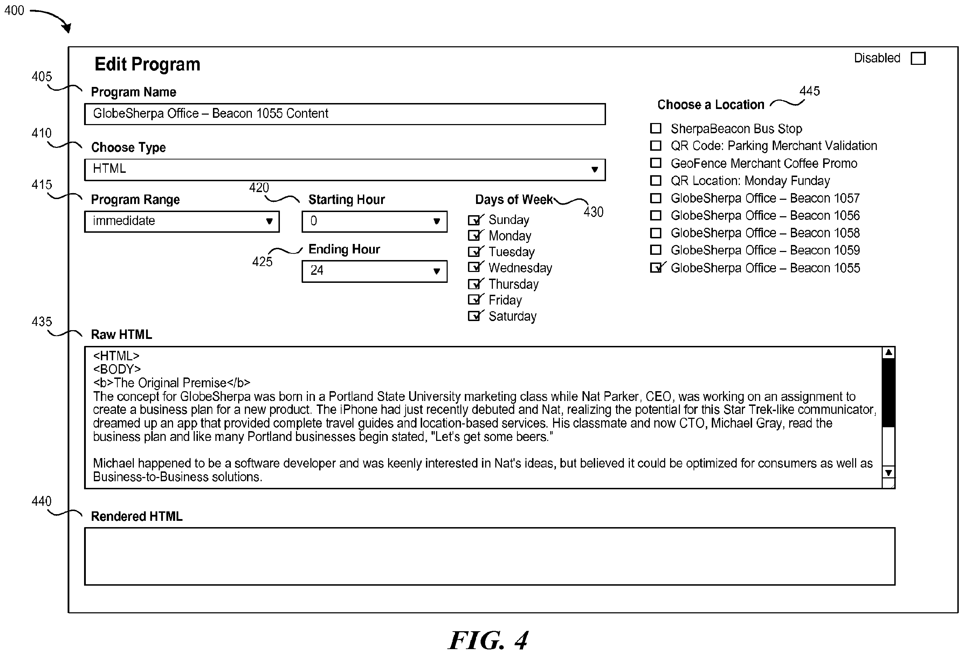

Next, the server retrieves and maps relevant content, based on the extracted information, at step 188. For example, the server can access a lookup table that includes rules for mapping content based on the information extracted from beacons. The content can be in the form of text, graphics, audio, video or any combination of media. The content can be of various types, such as real-time transit information, targeted marketing deals, or a combination of the above. The content also can be representative of, or customized for, user preferences, user demographics, merchant preferences, etc. Various examples of content are shown in connection with FIGS. 4-6.

Because mobile devices can have different computational and physical resources, in some embodiments, the server normalizes the content so that such content can be properly rendered on the user's mobile device, at step 190. In some embodiments, the server delivers dynamic, real-time content to a mobile application program running on a user's mobile device. The mobile application program can be associated with an entity that owns and operates the server. In some embodiments, content can be delivered to a user's mobile device via a widget, e.g., an embeddable dynamic content displayer. Such a widget can use web browser technologies to load and display content. A widget, in some scenarios, can also be embedded into native third party mobile application programs on a user's mobile device. Typically, a widget periodically wakes up and checks to see if any triggers have been activated. Various methodologies such as HTTP, HTTPS, web-socket, etc. can be used for rendering content on the user's mobile device.

In some embodiments, the DCMS server can deliver more than one type of content to a user's mobile device at the same time. The content can involve different types of information and/or campaigns. Further, such content can be created or managed by different sources. Accordingly, in scenarios where multiple types of content are delivered to a mobile device, the DCMS server resolves conflicts between the different types of content. For example in a hypothetical scenario, two or more coffee shops may have advertising campaigns set up that would result in delivery of their respective deals/coupons to a user's mobile device at the same time. Not only can the volume of content be large in such a scenario; it can be redundant and/or cumbersome as well. To resolve conflicts, a DCMS server can select one or more types of content based on other considerations. Examples of such considerations may include user preferences, a user velocity, a time when content was last delivered to a user, and the like. It will be understood that some of these considerations can involve querying the user's mobile device for additional data. For example, a DCMS server might have to query a user's mobile device to retrieve a user's velocity. In some scenarios wherein a user is waiting for a next public transport to arrive, a DCMS server delivers content to a user's mobile device after determining that the next public transport arrives after a sufficient time gap. Further, content delivered to a user's mobile device can be in the form of intermittent or periodic bursts, or one-time only.

The content can be received inside a mobile application program via push notifications, a URL (web link), images, or as a data object. Additionally, content can be received in an email or as a message delivered to the user's account on the server. In other words, the content can be received in real time as well as in non-real time.

Typically, the content is displayed on the home screen of a user's mobile device. With some types of mobile operating systems (e.g., iOS 8 and Android 4.3), push notifications are displayed on the home screen of a user's mobile device and once a user interacts with the push notification, a respective mobile application program is launched for further interaction.

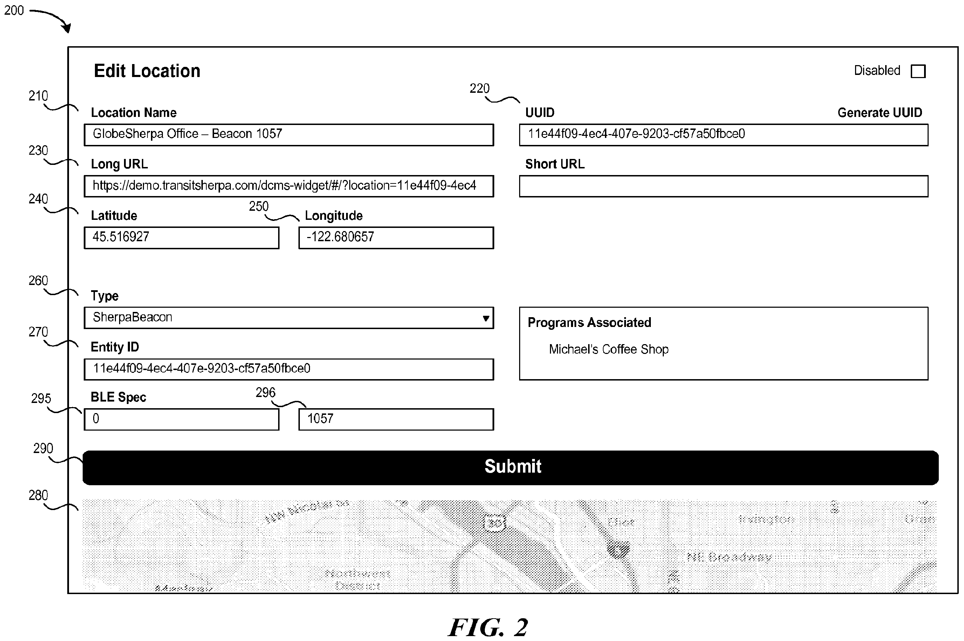

FIGS. 2-3 illustrate screenshots of exemplary webpages (200, 300) provided to a merchant by a DCMS server for configuring a beacon deployed at a location. In both figures, it is shown that a merchant inputs (usually via a keyboard) values of various fields. Exemplary fields common to FIGS. 2-3 include "Location Name" (210, 310), "UUID" (220, 320), "Long URL" (230, 330), "Latitude" (240, 340), "Longitude" (250, 350), "Type" (260, 360),and "Entity ID" (270, 370). "Location Name" is a unique identifier that can be used to refer to a beacon. "UUID" is a system-generated ID that can be used to uniquely identify a beacon. "Long URL" is a web address that enables the server to communicate with the beacon. "Short URL" is a shortened version of a "Long URL." "Latitude" and "Longitude" are used to identify the geographical co-ordinates where a beacon is located. It will be understood that one or more beacons can be attached at one location.

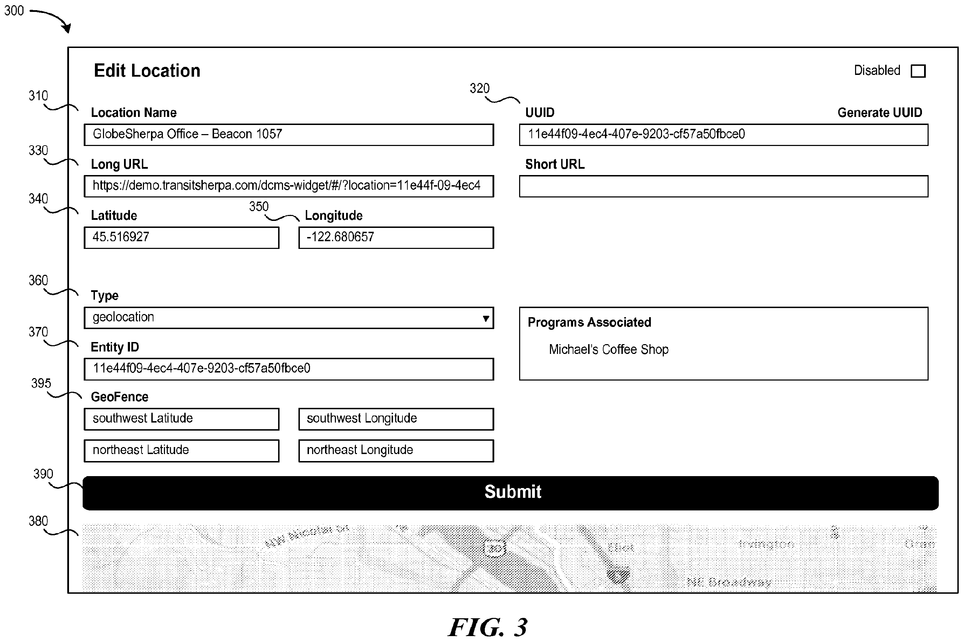

As previously discussed, beacons can be configured to operate in various modes, e.g., NFC, Bluetooth, etc. In these figures, a "Type" field is used to configure these various modes. For example, in FIG. 2, a beacon is configured using a proprietary mode ("SherpaBeacon"). In FIG. 3, a beacon is configured using another mode ("geolocation"). The "Entity ID" field, typically associated with the "UUID" field can be used as a primary key in a database table, e.g., in a lookup table that provides rules for mapping content, as discussed previously in FIG. 1.

Further, FIG. 2 and FIG. 3 illustrate that the location of the respective beacon(s) can be displayed on a map (280, 380) of the region. A "Submit" button (290, 390) on this webpage allows the inputs provided by a merchant to be submitted to a DCMS server.

Since various types of beacons can be used with embodiments of the present disclosure, each beacon mode can be associated with a description data set. Accordingly, FIG. 2 depicts that a merchant also entered a "BLE Spec" field, the "BLE Spec" field comprising two sub-fields: a beacon major ID (295) and a beacon minor ID (296). (In some embodiments, a DCMS server supplies the "BLE Spec" field.) FIG. 3 depicts that a merchant entered a "GeoFence" field (395), the "GeoFence" field comprising four sub-fields: a southwest latitude, a southwest longitude, a northeast latitude, and a northeast longitude.

The beacons can provide a way to track a user's mobile device when a beacon and a user's mobile device are in proximity with each other. As will be described in detail later herein, a user at a geographical location participates in one or more campaigns by a DCMS server via the user's mobile device.

FIG. 4 illustrates a screenshot of an example webpage 400 provided by a DCMS server to a merchant for creating/editing/reviewing campaigns, or "programs." A program can enable HTML data to be rendered on a user's mobile device when certain criteria are satisfied, including detecting that the user has approached a beacon or other trigger that is associated with the program.

In FIG. 4, a merchant is prompted to provide a "Program Name" 405 for the campaign. Since campaigns can differ from each other with respect to their objectives, target audiences, types of content delivered, geographical locations, etc., a merchant can input a set of parameters to be associated with a campaign. Examples of such parameters include a type, a range, a starting hour, an ending hour, and the like. Accordingly, in FIG. 4, it is shown that a merchant enters the value of such parameters in fields such as a "Choose Type" 410, a "Program Range" 415, a "Starting Hour" 420, an "Ending Hour" 425, a "Days of week" 430. With the "Choose Type" parameter, the merchant can choose whether the campaign will, for example, generate an HTML page on a user's mobile device screen, download a file, interact with an application running in the user's mobile device, etc. The "Program Range" field can enable the merchant to select, for example, whether the DCMS should transmit to the user when the user's mobile device travels somewhat near the beacon or trigger, or only when the beacon or trigger has become very close (within a few feet) of the beacon or trigger. The temporal fields (starting hour, ending hour, days of week) enable the merchant to customize the campaign to set limits for when the DCMS should transmit to the user. In other words, if the "Days of Week" field 430 is set to "Sunday" only, then the campaign will only send data to a user's mobile device on Sundays, even if the user travels in the close vicinity of an associated beacon on Saturdays as well.

The interface 400 for the program also enables the user to include the raw HTML file 435 for what will be rendered on a user's mobile device screen and the rendered HTML image 440. In this manner, if the type of program 410 is an HTML file, the merchant can see at a glance what the HTML file is (to see the coupon, advertisement, or other display) and can make changes to the file when necessary or desired. With this preview, the merchant can ensure that mobile device users will receive the experience intended by the creators of the campaign.

Because campaigns are associated with a user's presence at a geographical location, and beacons track a user's mobile device when a beacon and a user's mobile device are in proximity with each other, the webpage in FIG, 4 also shows a "Choose a Location" field 445. This field is used by the merchant to select one or more beacons that are already or will be associated with a respective campaign.

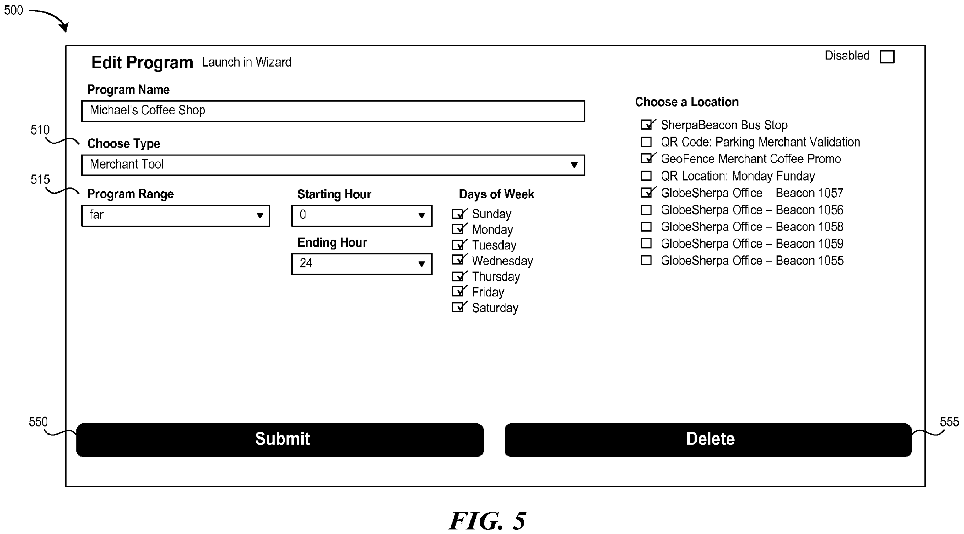

FIG. 5 illustrates a screenshot of a second example webpage 500 provided to a merchant for creating/reviewing campaigns. Specifically, the exemplary campaign shown in FIG. 5 relates to a coffee shop advertisement. As in FIG. 4, a merchant enters the value of various fields such as a "Choose Type," a "Program Range," a "Starting Hour," an "Ending Hour," and a "Days of week." In this example, however, instead of choosing "HTML" for the type to render an HTML on the user's mobile device, the merchant selects for "Merchant Tool" for the Type 510. Also, in this example, for the Program Range 515, the merchant selects "far," which means that the campaign will interact with the user's mobile device even if the device does not become very close to the physical location of the beacon.

As can be seen in FIG. 5, a "Submit" button on this webpage allows the inputs by a merchant to be submitted to a DCMS server. A "Delete" button 555 allows deletion of the campaign.

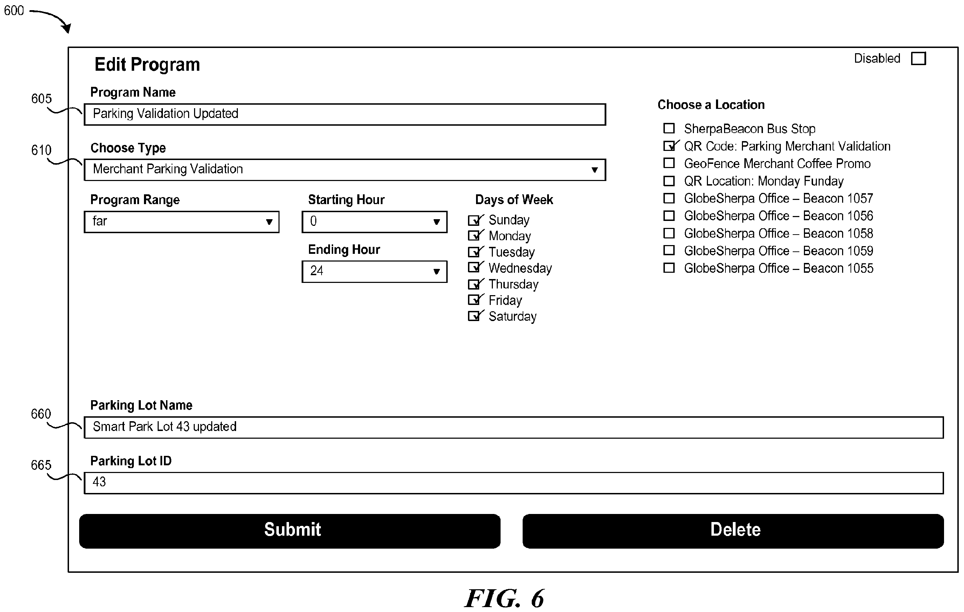

FIG. 6 illustrates a screenshot of a third example webpage 600 provided to a merchant for creating/reviewing campaigns. Specifically, the example campaign shown in FIG 6 is in connection with a parking lot. In this example, the merchant enters "Parking Validation" for the Program Name 605 and chooses "Merchant Parking Validation" for the Type 610. Based on the selection of the Type 610, the webpage generates fields for Parking Lot Name 660 and Parking Lot ID 665 (instead of the Raw HTML 435 and Rendered HTML 440 fields in the example webpage in FIG. 4). As is shown in FIGS. 4 and 5, the merchant can enter the value of various other fields such as a "Program Range," a "Starting Hour," an "Ending Hour," and "Days of week." Similar to FIG. 5, a "Submit" button on this webpage allows the inputs provided by a merchant to be submitted to a DCMS server and a "Delete" button allows deletion of the campaign.

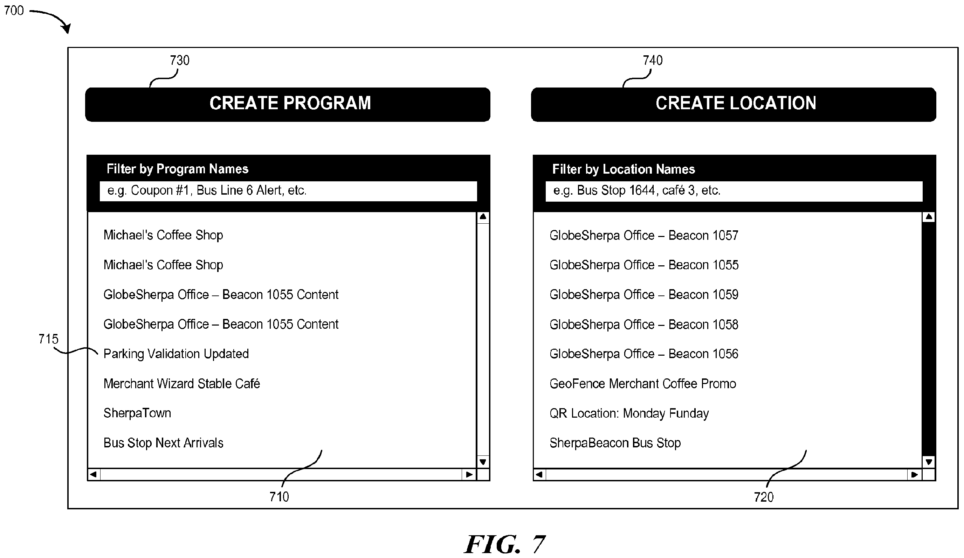

FIG. 7 illustrates a screenshot of an example high-level screen 700 provided to a merchant for managing various marketing deals for which the merchant is utilizing the DCMS. As can be seen, the webpage 700 enables the merchant to access each program (or campaign) by title 710. For example, if a merchant selects to review "Parking Validated Updated" 715, the DCMS generates screen 600 as shown in FIG. 6. The merchant can scroll through the Program Names or use a filter prompt to enter the desired name for the program/campaign. The high-level screen 700 also enables the merchant to review details about beacon or other trigger locations 720. By clicking on a location name 720, the merchant can access detailed information about the beacon or other trigger. Finally, the high-level screen 700 enables the merchant to create a new program 730 or create a new location 740 for a beacon or trigger. In some embodiments, as discussed previously, the server allows beacons to be configured in various modes (e.g., NFC, Bluetooth, etc.). Each such mode can be associated with a description data set.

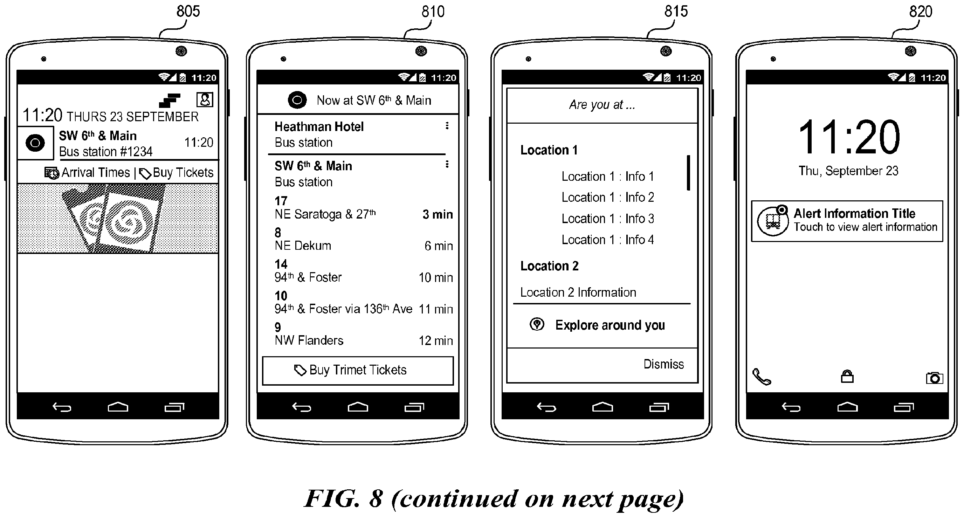

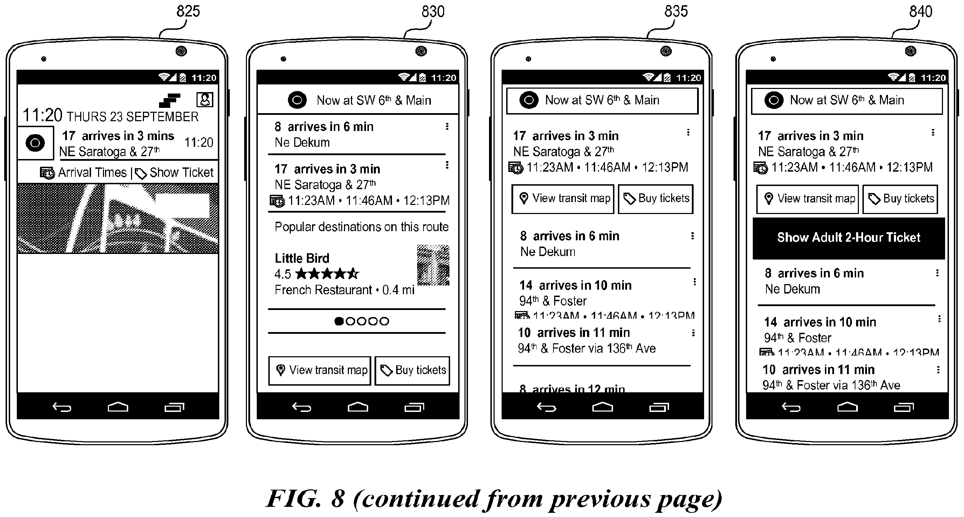

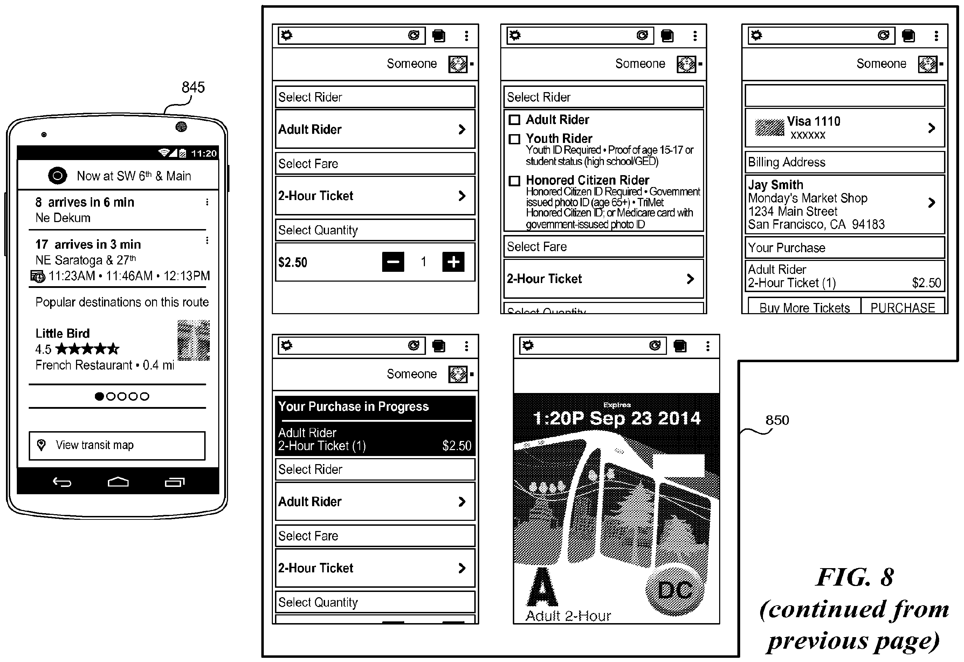

FIG. 8 illustrates several screenshots of a mobile device displaying real-time transit information. Some screenshots in FIG. 8 also display the DCMS server providing users with the functionality of purchasing a mobile ticket. In some instances, the mobile ticket purchase involves methodologies as disclosed in U.S. Patent Publication No. 2014/0095227.

As an example, when a mobile device user approaches a bus station, the mobile device may be "triggered" by a beacon or other trigger located at the bus station, causing the mobile device to send a beacon interaction request to the DCMS. The program running on the DCMS that is associated with this beacon or trigger may cause the user's mobile device to open a ticketing app on the mobile device. For example, screen 805 shows the location of the nearby bus station and prompts the user to check arrival times or purchase tickets. By clicking on "arrival times," the screen 810 may be generated that indicates the arrival times of certain buses and also prompts the user to purchase transit tickets. As another option, screen 815 may be generated to prompt the user to select a nearby location and then select from a plurality of information that is relevant to that location. Screen 820 is an example screen providing an alert when the DCMS transmits an alert to the user's mobile device screen but requires that the user select to receive the underlying information. Screens 825, 830, 835, 840, and 845 are displays that combine arrival information with other information, including ticketing, nearby merchandisers (see 830), and prompts for showing a purchased ticket for visually validated ticket redemption (see 840). Screens 850 illustrate screens for a visually validated ticketing application.

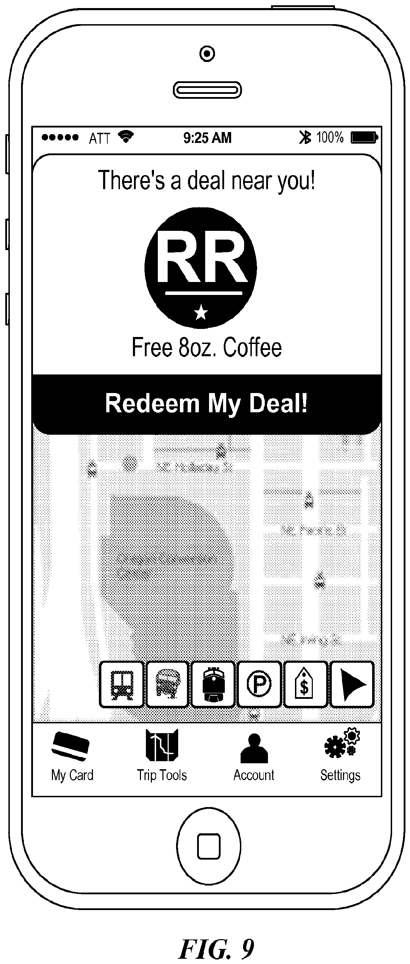

FIG. 9 illustrates a screenshot of a mobile device displaying a targeted marketing deal to an end user. In this screenshot, a user is given a deal for a free coffee when the user is waiting for a bus at a bus stop. The "deal" was generated via the DCMS and was triggered by a beacon or other trigger indicating that the user's mobile device was in the vicinity of the bus stop.

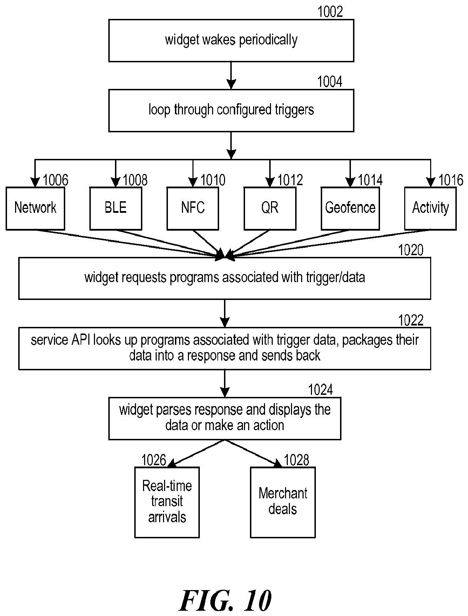

FIG. 10 illustrates actions taken by a widget, for example, embedded in a mobile application program, running on a user's mobile device to receive targeted marketing offers from a DCMS server. Starting at step 1002, a widget wakes up from a dormant state, for example, at periodic intervals of time. After waking up, the widget loops through configured triggers to identify one or more active triggers, at step 1004. As disclosed in embodiments herein, a trigger can be to identify a user's location when a user is approaching or arrives at a certain geographical location. Content (e.g., in the form of text, graphics, audio, video or any combination of media) that is relevant to the user's context, such as the user's geographical location, the time of day, etc., is then delivered to the user. For example, a widget can loop through the following triggers in an example implementation: a network subnet 1006, a BLE beacon 1008, a NFC-based trigger 1010, a QR-reader 1012, a geofence 1014, or even detection of a user's behavioral action 1016 (such as a fixed number of steps taken by a user when the user is moving), as detected by an accelerometer or any other sensor, for example. At step 1020, a widget communicates to a ticketing server or a DCMS server requesting for data related to marketing programs that are associated with one or more active triggers. In some embodiments, the widget sends trigger-specific information for the active trigger(s) to the DCMS server. Accordingly, in some embodiments, the service API associated with the DCMS server looks up data related to marketing programs that are associated with the active triggers, and transmits such data back to the widget, at step 1022. Upon receiving the response, the widget parses (at step 1024), and displays the data on a user's mobile device. Such data, for example can include transit-related information 1026 or marketing campaigns/deals 1028 offered by merchants.

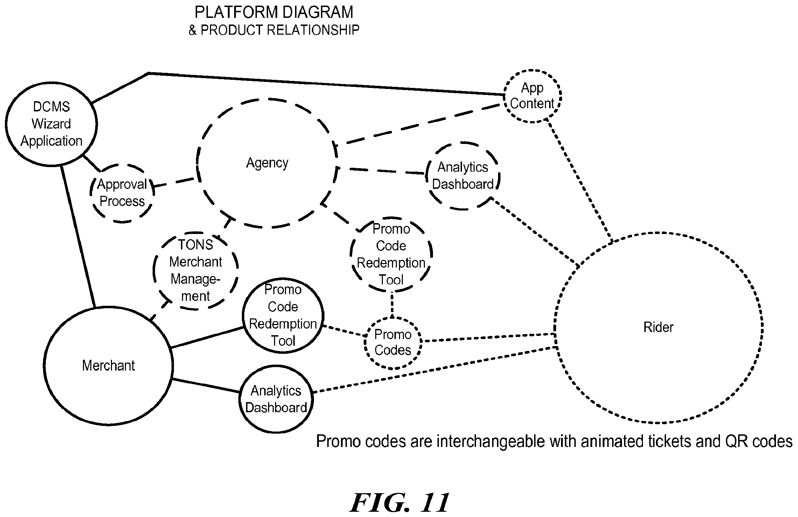

FIG. 11 illustrates exemplary components and data items in connection with the DCMS server facilitating delivery of targeted marketing offers to users, in accordance with embodiments of the present disclosure. For example, a DCMS Wizard Application can be configured by a merchant to generate mobile app content (e.g., information provided by a transit agency) that is delivered to a rider's (user's) mobile application. As disclosed herein, in some embodiments, the marketing deals are embedded in the mobile app content along with, for example, transit-related information provided by the transit agency. In some embodiments, a transit agency approves (via an approval process) of the marketing campaigns/deals created by the merchant.

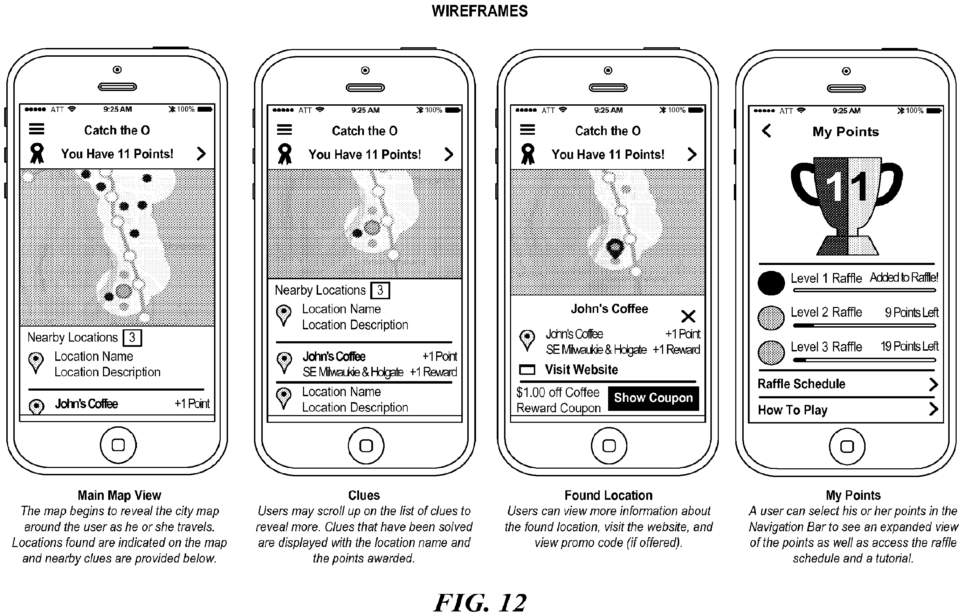

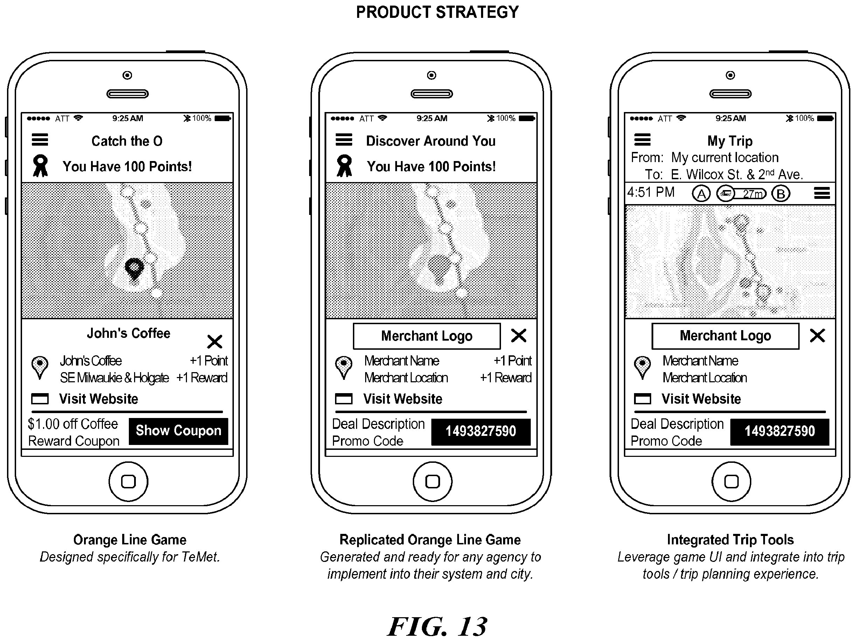

FIGS. 12-13 illustrate user interface screenshots of a mobile application for engagement of users with various merchant-related activities such as interactive games, sweepstakes, scavenger hunts, etc. Such merchant-related activities can, for example, be defined by merchants when a merchant is defining / creating a marketing campaign. As illustrated by these screenshots, in some embodiments, users can view their location on a map, with respect to merchants / merchants who offer targeted marketing offers. Further, users can also redeem points / coupons when they walk or pass a merchant / merchant location a number of times. In some embodiments, merchants can review analytics associated with users utilizing resources associated with the merchant. For instance, a merchant can view the number of times a coupon was redeemed, the earnings, the savings, the total points collected, and the like. Further, merchants can define the targeted marketing offers and review such offers as they are going to be presented to users. Defining targeted marketed offers includes defining discounts available to users, a time period when such discounts are available, the amount associated with such offers, and the like.

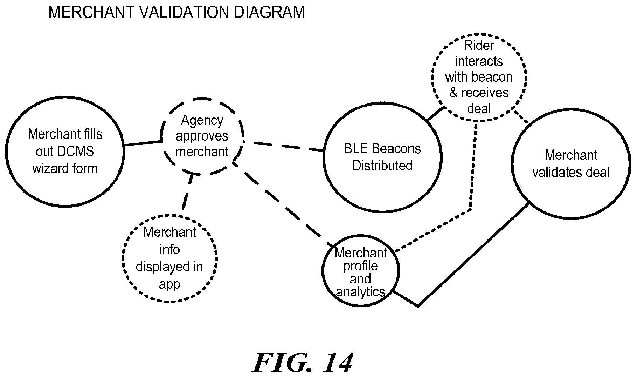

FIG. 14 illustrates a sequence of intermediate states between a merchant defining a marketing campaign and a merchant validating a deal redeemed by a user. For example, a merchant creates a marketing campaign by filing out a DCMS wizard form. In embodiments disclosed herein, marketing campaigns provided by a merchant are delivered by a mobile application of a transit agency that provides users with marketing campaigns in addition to transit-related information, for example. The marketing campaigns can involve deals and discounts offered by merchants to users based on the location and personal preferences of users. In some embodiments, personnel associated with a transit agency approve (or, reject) one or more marketing campaigns / offers provided by merchants. Thus, information pertaining to a merchant, such as the merchant's profile and associated analytics (if any) of the merchant and / or the merchant's marketing campaigns collected by the DCMS can be provided to a transit agency, as part of the approval process. In some embodiments, a user's location and context can be determined based on a user being located close to a BLE beacon, for example. A user's mobile device interacts with the BLE beacon (or, in general with trigger-based tracking devices) when the user is in close proximity to a beacon location. Accordingly, the DCMS server receives, from a user's mobile device, information identifying the beacon's location, which can, in turn be used to determine the user's geographical location. The DCMS can provide marketing offers and deals provided by one or more merchants in proximity to the user's geographical location. A user can review the merchant deals and offers delivered on the user's mobile device via a transit agency app. Accordingly, the user can travel to the merchant location to redeem the deal which is validated by the merchant. In some embodiments, the DCMS provides analytics of the marketing campaign to merchants for them to gauge the effectiveness of the campaigns.

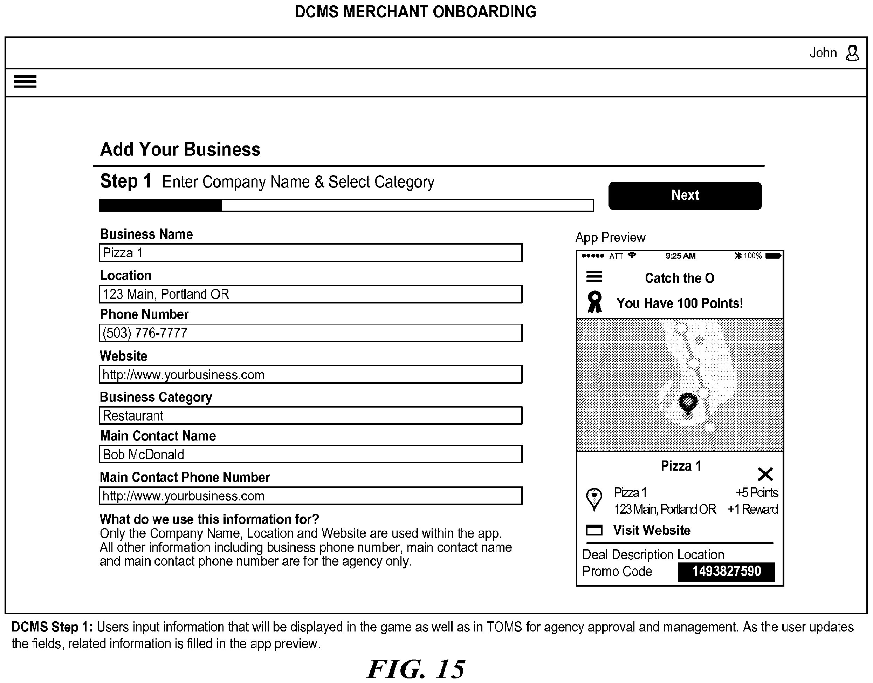

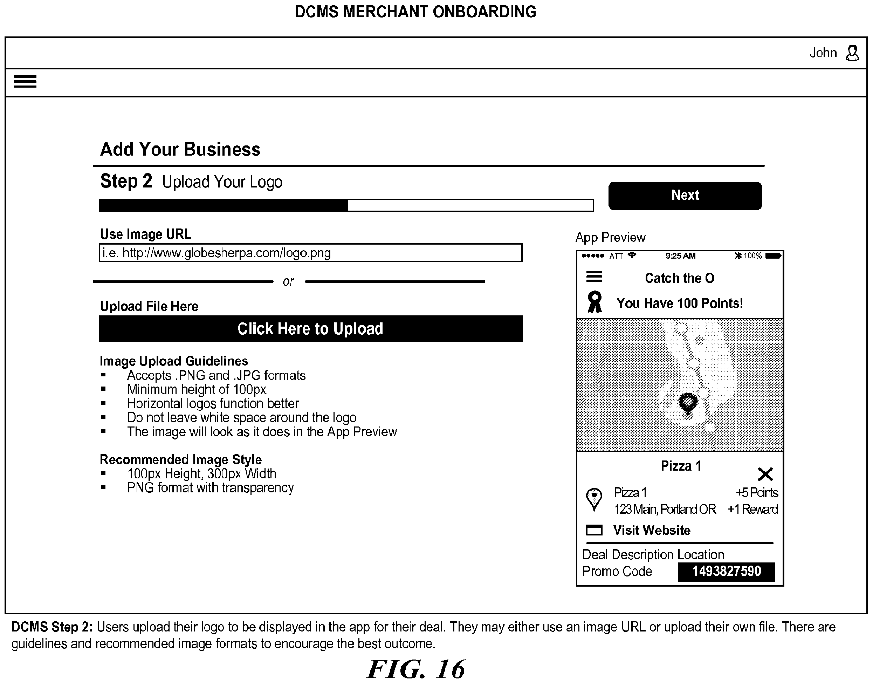

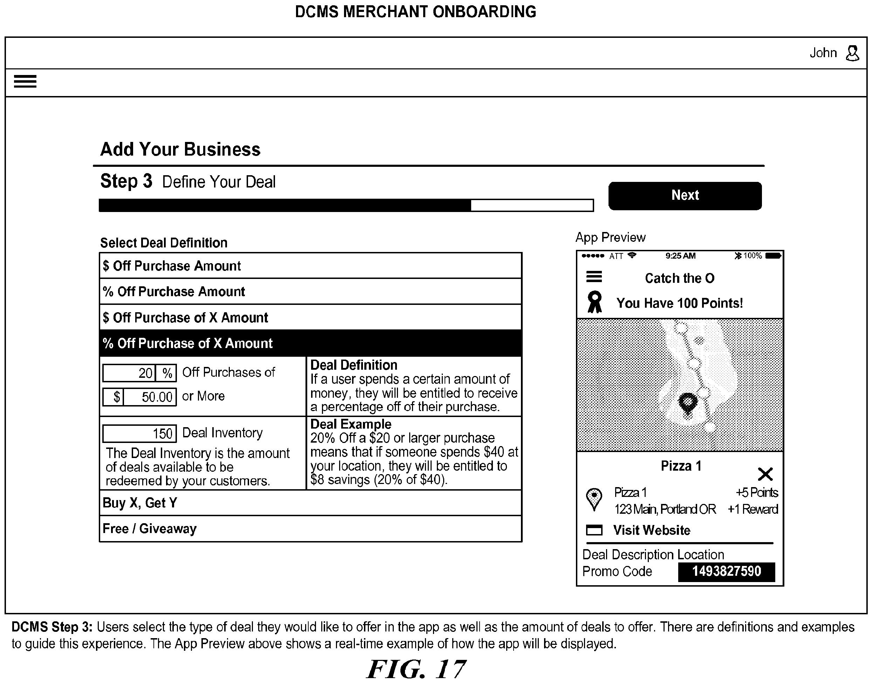

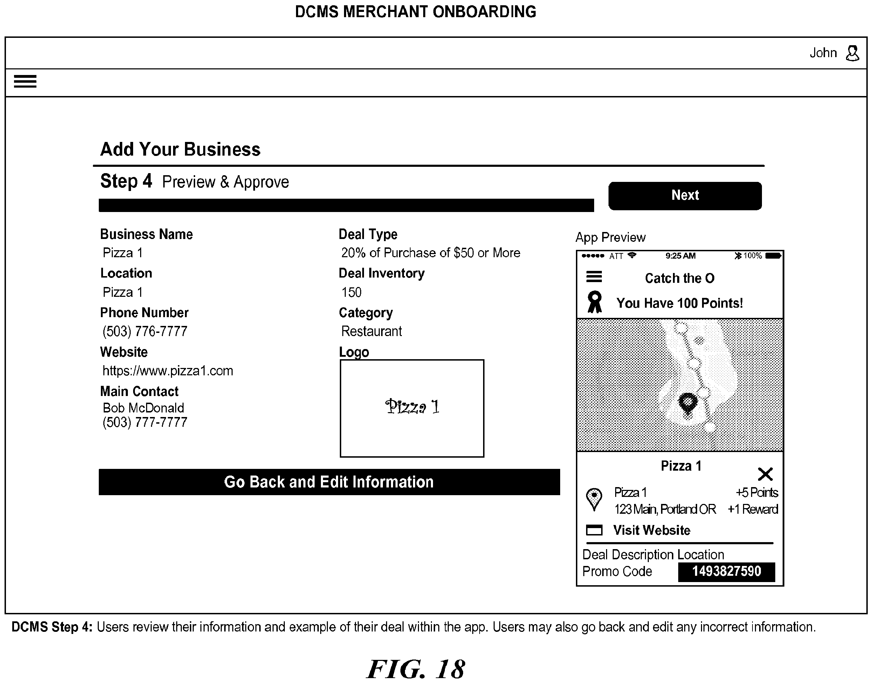

FIGS. 15-18 illustrate screenshots showing exemplary DCMS interfaces for merchants to define or configure their marketing programs. For example, FIG. 15 shows a DCMS interface for a merchant to enter information identifying a merchant, such as a name, a business location, a website address, a business category for the merchant, a contact name and a phone number for the merchant, etc. In FIGS. 15-18 a restaurant for a merchant named "Pizza One" is shown to be part of a marketing campaign. In FIG. 17, a merchant can upload the logo for his business. In some embodiments, the DCMS optionally provides tips and recommendations for best practices to merchants. Interested merchants can apply such tips and recommendations to maximize their revenue generation. FIG. 17 illustrates exemplary details of a marketing offer that can be provided by a merchant. For example, as shown in FIG. 17, the offer can be in the form of a percentage discount or a monetary value discount. In some examples, merchants can also provide loyalty points and/or free giveaways to users / customers who redeem the marketing offers. In some DCMS embodiments, the interface for defining marketing offers provides a real-time preview of the marketing campaign to a merchant, while a merchant is creating the marketing campaign. Further, as shown in FIG. 18, merchants can edit their marketing offers/campaigns when a marketing campaign is being created, or at a later time, while a marketing campaign is running.

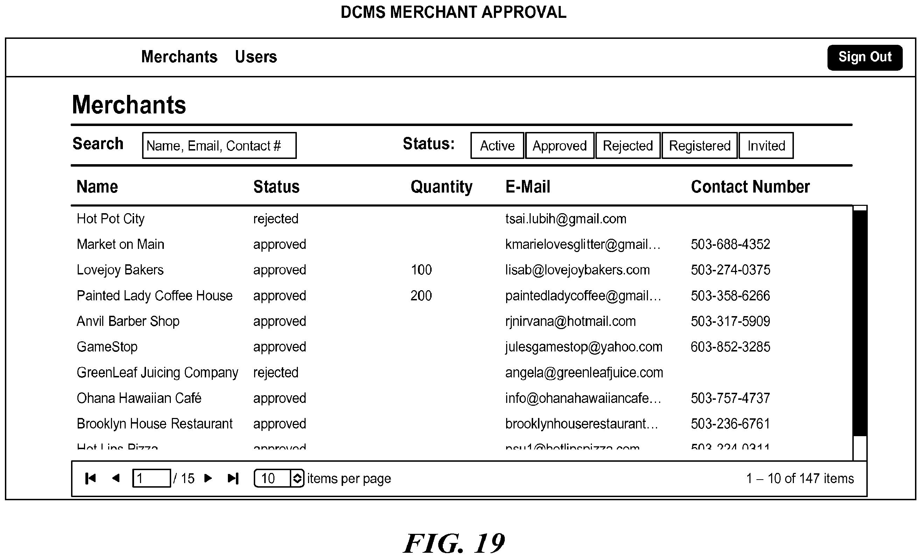

FIG. 19 illustrates an exemplary DCMS interface for personnel associated with a transit agency to approve one or more marketing campaigns / offers provided by merchants. Tab 1902 in FIG. 19 provides a list of exemplary approval statuses. For example, approval statuses can include an active status, an approved status, a rejected status, a registered status, and an invited status. Various other approval statuses of marketing campaigns can be included in embodiments of the DCMS. FIG. 19 also shows a list of exemplary merchants and a corresponding approval status of a merchant. For example, a "Hot Pot City" merchant is shown to have a rejected status, whereas a "Market On Main" merchant is indicated as being approved by a transit agency.

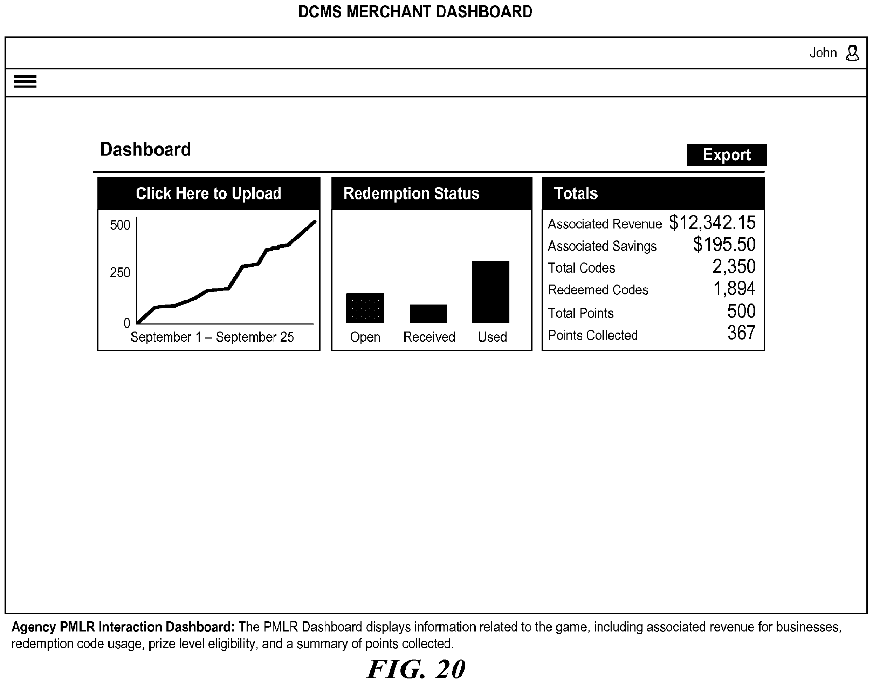

FIG. 20 illustrates a DCMS interface displaying exemplary analytics associated with a marketing campaign, as viewed by a merchant. In some embodiments, the dashboard displays loyalty points collected by users over a period of time, a redemption status (e.g., how many points have been distributed, how many points still remain to be used by users, how many points have already been used by users and the like). FIG. 20 also shows that a merchant can view revenue generated and user savings provided in connection with the marketing campaign. It will be understood that the analytics shown in FIG. 20 are for discussion purposes only. Various other analytics involving mathematical / statistical analysis of parameters of a marketing campaign can be computed by embodiments of the DCMS, and displayed to merchants, in embodiments of the disclosed system. Analytics pertaining to a marketing campaign can be used by merchants to track user engagement with a marketing campaign. In some embodiments, the DCMS receives feedback from users in connection with the effectiveness of a marketing campaign. Analytics associated with a marketing campaign and/or feedback from users can be used by marketers to refine the parameters of a marketing campaign so as to maximize the profitability of merchants.

As described herein, in some embodiments, users can redeem offers from merchants based on a QR code, a promotional code, or an animation displayed on the screen of their mobile device. The QR code, the promotional code, or the animation can be transmitted by the DCMS server to a user's mobile device, in response to the DCMS server determining that a user is located in close proximity to a merchant location. Such a determination can be via a user's mobile device communicating with a trigger-based tracking device mounted at a transit location or a merchant facility.

Aspects of the present disclosure relate to creating, managing, and dispersing mobile transit tickets from a mobile ticket processor via an intermediary third party processor (alternatively referred to herein as a third party server). It will be appreciated that in some embodiments the third party server is an entity that is distinct from the transit agency. In some other embodiments, a transit agency can provide one or more functionalities of a third party server. The mobile transit tickets can be configured for delivery to a third party mobile application program on a user's mobile device. The mobile application program can be associated with an entity that owns and operates the third party processor. In some embodiments, the mobile tickets can be delivered to a user's mobile device via a widget, e.g., an embeddable mobile ticket displayer. Such a widget can use web browser technologies to load and display a mobile ticket. A widget, in some scenarios, can also be embedded into a third party mobile application program on a user's mobile device. Various methodologies such as HTTP, HTTPS, web-socket, etc. can be used for delivery of mobile tickets to a user's mobile device.

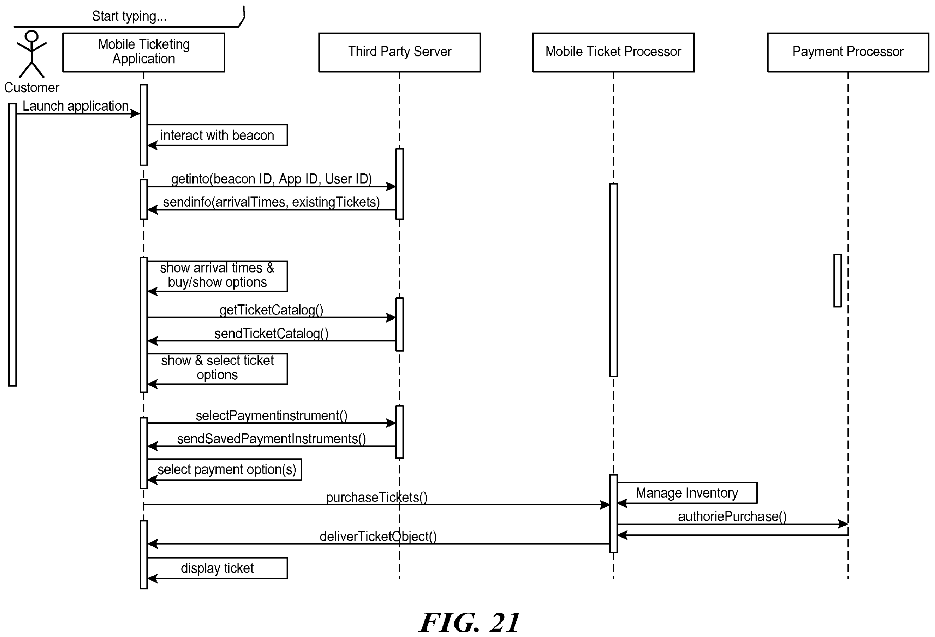

FIG. 21 illustrates a sequence diagram showing interactions among the various components of the overall system in a scenario wherein a user is presented with an option to purchase a mobile ticket via a third party server. Specifically, FIG. 21 illustrates the following components: an interface on a user's mobile device ("Application Interface"), a third party server, a mobile ticket processor, and a payment processor. The displayed interactions begin with a user (customer) launching a mobile application program. As discussed previously, when a user is in close proximity to a beacon location, a trigger is activated. In other words, a user's mobile device receives communication from the beacon that includes a beacon interaction request, when the user is in close proximity to a beacon location. This beacon interaction request is then passed on to a third party server by the user's mobile device. A beacon information request received at a third party server from a user's mobile device also includes information identifying the user's mobile device. Examples of such information include a user's mobile device type, an operating system type, an operating system version, and the like. Hence, a third party server is able to extract beacon-related information and a user's mobile device-related information.

In response, the third party server provides transit-related and ticket-related information in real time to the user's mobile device. Additionally, the third party server also provides the user with an option to purchase tickets. In some instances, the mobile application program requests a third party server to provide a catalog of tickets that are available for purchase. Accordingly, the third party server responds with such a catalog, which is displayed to the user via the mobile application program. Next, the user selects a payment instrument (via the catalog displayed on the mobile application program) which is then communicated to the third party server. Typically, the user has one or more payment options pre-stored in the user's account with the third party server. These payment options are communicated to the mobile application program, for selection by the user. After a user selects a payment option, he or she authorizes purchase of a ticket. This authorization is passed on to the mobile ticket processor by the mobile application program. Accordingly, the mobile ticket processor updates the inventory of tickets. Additionally, a mobile ticket processor requests a payment processor (e.g., associated with a bank or a financial institution associated with a user's account) to debit a dollar amount in connection with the purchase of the mobile ticket. After the payment processor has debited the appropriate dollar amount, the payment processor informs the mobile ticket processor of the transaction, i.e., details of the dollar amount debited, a date and/or a time pertaining to the debit, a confirmation number pertaining to the debit, and the like. Subsequently, the mobile ticket processor delivers the mobile ticket to the user's mobile device which is eventually displayed to the user.

In some embodiments, the third party server provides functionalities similar to a DCMS server. For example, in conjunction with providing a user with an option to purchase tickets, a third party server can deliver targeted content to a user's mobile device.

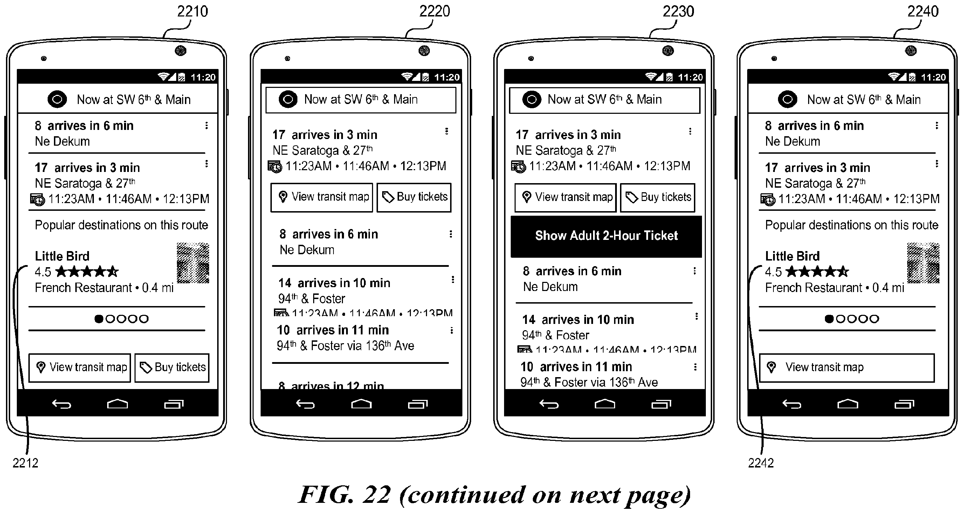

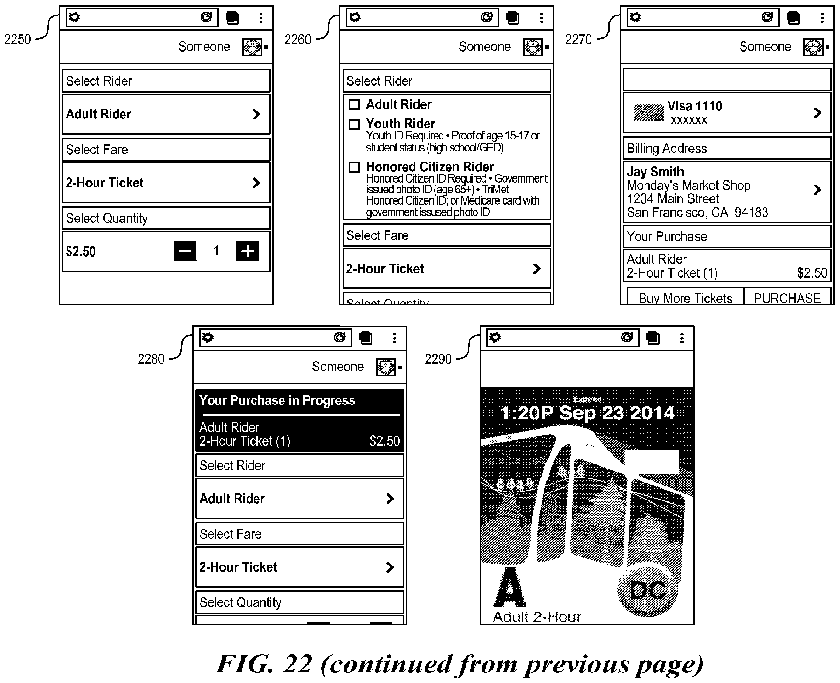

FIG. 22 illustrates screenshots 2210, 2220, 2230, 2240, 2250, 2260, 2270, 2280, and 2290 of a mobile device displaying real-time transit information and in connection with a user purchasing a ticket from a third party server different than the transit agency. In some embodiments, a mobile ticketing application running on a user's mobile device communicates with a third party server for providing users with the functionality of purchasing a ticket. As shown in region 2212 of screenshot 2210, in some embodiments, the third party server provides targeted content about a restaurant "Little Bird" that is in close proximity to a user. Screenshots 2210, 2220, 2230, and 2240 provides information about real-time transit arrivals to the user's mobile device when the user is at or in close proximity to a transit stop, such as a train station or a bus stop. Screenshot 2240 shows transit-related information on a user's mobile device, in addition to targeted content (e.g., an advertisement about a "Little Bird" restaurant). Screenshots 2250, 2260, 2270, and 2280 display various options in connection with purchasing a ticket by a user.

In some embodiments, the mobile ticketing application running on the user's mobile device communicates, in addition to the third party server. For example, as shown in screenshots 2250, 2260, 2270, and 2280 the mobile ticketing application can communicate with a mobile ticket processor for selecting a type of a rider (e.g., an adult, a member of the armed forces, or a child), payment information associated with the user's ticket purchase, a type of a ticket (e.g., a ticket that is valid for a limited time duration), a quantity of tickets that a user intends to purchase, etc. Screenshot 2290 shows an example of a mobile ticket displayed on the screen of a user's mobile device. In some instances, the mobile ticket purchase involves methodologies as disclosed in U.S. Patent Publication No. 2014/0095227.

In this disclosure, numerous specific details have been set forth in order to provide a thorough understanding of embodiments of the present disclosure. It will be apparent, however, to one skilled in the art that embodiments of the present disclosure may be practiced without some of these specific details. Further, although examples used in this disclosure refer to terms such as "marketing deals," "advertisement campaigns," and "programs" created by "merchants," in general, aspects of the disclosure allow any kinds of campaigns to be created by individuals and/or organizations. Also, in alternative embodiments, a trigger can be created by other means such as a network subnet, a WiFi network, or even a user's behavioral action, e.g., a fixed number of steps taken by a user when the user is moving, etc. Aspects of a CMS server described herein includes a graphical, browser-based editor that provides an interface for managing campaigns for delivery of content to a user's mobile device and configuration of triggers associated with delivery of such content.

Embodiments of the present disclosure include various steps. The steps may be performed by hardware components or may be embodied in machine-executable instructions, which may be used to cause a general-purpose or special-purpose processor programmed with the instructions to perform the steps. Alternatively, the steps may be performed by a combination of hardware, software and/or firmware.

Embodiments of the present disclosure may be provided as a computer program product, which may include a machine-readable medium having stored thereon instructions, which may be used to program a computer (or other electronic devices) to perform a process. The machine-readable medium may include, but is not limited to, floppy diskettes, optical disks, compact disc read-only memories (CD-ROMs), and magneto-optical disks, ROMs, random access memories (RAMs), erasable programmable read-only memories (EPROMs), electrically erasable programmable read-only memories (EEPROMs), field programmable gate arrays (FPGAs), application-specific integrated circuits (ASICs), vehicle identity modules (VIMs), magnetic or optical cards, flash memory, or other type of media/machine-readable medium suitable for storing electronic instructions.

Moreover, embodiments of the present disclosure may also be downloaded as a computer program product or data to be used by a computer program product, wherein the program, data, and/or instructions may be transferred from a remote computer to a requesting computer by way of data signals embodied in a carrier wave or other propagation medium via a communication link (e.g., a modem or network connection).

## Claims

1. A method for delivering targeted marketing content to a user of a mobile device (105) in a transit station, by a server (110), comprising:
triggering, by a tracking device, external to the user's mobile device and located at the transit station, the user's mobile device;
receiving, by the server, information from the user's mobile device (105) in response to the triggering, wherein the information identifies a context with respect to the tracking device (115) ;
identifying, by the server, at least one marketing campaign program in the server associated with the tracking device;
applying, by the server, conditions of the identified marketing campaign program to the context received from the user's mobile device;
determining, by the server, that a next transport arrives after a sufficiently large time gap;
based upon the application of the conditions and upon said determining, selectively providing, by the server, targeted marketing content associated with the identified marketing campaign program, to the user's mobile device;
causing, by the server, a mobile ticketing application of a transit agency to be opened on the user's mobile device; and
causing, by the server, the mobile ticketing application to generate a prompt to purchase transit tickets that are identified based on transit-related information of the mobile ticketing application,
wherein the provided content and the prompt to purchase transit tickets are embedded inside the transit-related information.

2. The method of claim 1, wherein the context includes information identifying the user's mobile device (105).

3. The method of claim 2, wherein the context includes beacon identification information.

4. The method of claim 1, wherein the tracking device (115) is a Bluetooth low energy beacon.

5. The method of claim 1, wherein the tracking device (115) is ageofence.

6. The method of claim 5, wherein the context includes parameters associated with the geofence, the parameters including a southwest latitude, a southwest longitude, a northeast latitude, and a northeast longitude.

7. The method of claim 1, wherein the conditions for the identified marketing campaign program include temporal restrictions for providing marketing content, such that the server (110) selectively provides targeted marketing content upon receiving information from a user's mobile device (105) at a date and/or time that corresponds to the temporal restrictions.

8. The method of claim 1, wherein the step of selectively providing targeted marketing content further comprises rendering an HTML image on a display screen of the user's mobile device (105) based upon raw HTML stored on the server for the identified marketing campaign program.

9. The method of claim 1, wherein the conditions of the identified marketing campaign include a distance range and the information received from a user's mobile device (105) includes an indication of the distance between the user's mobile device and the tracking device, such that the server selectively provides targeted marketing content upon determining that the user's mobile device is within a distance of the tracking device that corresponds with the conditions of the identified marketing campaign.

## Patentansprüche

1. Verfahren zum Liefern von zielgerichtetem Marketinginhalt an einen Benutzer einer mobilen Vorrichtung (105) in einer Transitstation, durch einen Server (110), umfassend:
Auslösen der mobilen Vorrichtung des Benutzers durch eine Tracking-Vorrichtung außerhalb der mobilen Vorrichtung des Benutzers und die sich an der Transitstation befindet;
Empfangen, durch den Server, von Informationen von der mobilen Vorrichtung (105) des Benutzers als Reaktion auf das Auslösen,
wobei die Informationen einen Kontext in Bezug auf die Tracking-Vorrichtung (115) identifizieren;
Identifizieren, durch den Server, von zumindest einem Marketingkampagnenprogramm in dem Server, der der Tracking-Vorrichtung zugeordnet ist;
Anwenden, durch den Server, von Bedingungen des identifizierten Marketingkampagnenprogramms auf den Kontext, der von der mobilen Vorrichtung des Benutzers empfangen wird;
Bestimmen, durch den Server, dass ein nächster Transport nach einer ausreichend großen Zeitlücke ankommt;
basierend auf der Anwendung der Bedingungen und auf dem Bestimmen, selektives Bereitstellen, durch den Server, von zielgerichtetem Marketinginhalt, der dem identifizierten Marketingkampagnenprogramm zugeordnet ist, an die mobile Vorrichtung des Benutzers;
Bewirken, durch den Server, dass eine mobile Ticketing-Anwendung einer Transitagentur auf der mobilen Vorrichtung des Benutzers geöffnet wird; und
Bewirken, durch den Server, dass die mobile Ticketing-Anwendung eine Aufforderung zum Kaufen von Transittickets erzeugt, die basierend auf transitbezogenen Informationen der mobilen Ticketing-Anwendung identifiziert werden,
wobei der bereitgestellte Inhalt und die Aufforderung zum Kaufen von Transittickets in die transitbezogenen Informationen eingebettet sind.

2. Verfahren nach Anspruch 1, wobei der Kontext Informationen beinhaltet, die die mobile Vorrichtung (105) des Benutzers identifizieren.

3. Verfahren nach Anspruch 2, wobei der Kontext Beacon-Identifizierungsinformationen beinhaltet.

4. Verfahren nach Anspruch 1, wobei die Tracking-Vorrichtung (115) ein Bluetooth-Low-Energy-Beacon ist.

5. Verfahren nach Anspruch 1, wobei die Tracking-Vorrichtung (115) ein Geofence ist.

6. Verfahren nach Anspruch 5, wobei der Kontext Parameter beinhaltet, die dem Geofence zugeordnet sind, wobei die Parameter einen Südwestlängengrad, einen Südwestbreitengrad, einen Nordostlängengrad und einen Nordostbreitengrad beinhalten.

7. Verfahren nach Anspruch 1, wobei die Bedingungen für das identifizierte Marketingkampagnenprogramm zeitliche Einschränkungen zur Bereitstellung von Marketinginhalt beinhalten, sodass der Server (110) beim Empfangen von Informationen von einer mobilen Vorrichtung (105) eines Benutzers zu einem Datum und/oder einer Zeit, das/die den zeitlichen Einschränkungen entspricht, selektiv zielgerichteten Marketinginhalt bereitstellt.

8. Verfahren nach Anspruch 1, wobei der Schritt des selektiven Bereitstellens von zielgerichtetem Marketinginhalt ferner das Rendern eines HTML-Bildes auf einem Anzeigebildschirm der mobilen Vorrichtung (105) des Benutzers basierend auf roher HTML, die auf dem Server für das identifizierte Marketingkampagnenprogramm gespeichert ist, umfasst.

9. Verfahren nach Anspruch 1, wobei die Bedingungen der identifizierten Marketingkampagne eine Abstandsreichweite beinhalten und die Informationen, die von einer mobilen Vorrichtung (105) eines Benutzers empfangen werden, eine Angabe des Abstands zwischen der mobilen Vorrichtung des Benutzers und der Tracking-Vorrichtung beinhalten, sodass der Server selektiv zielgerichteten Marketinginhalt bereitstellt, wenn bestimmt wird, dass sich die mobile Vorrichtung des Benutzers innerhalb eines Abstands der Tracking-Vorrichtung befindet, der den Bedingungen der identifizierten Marketingkampagne entspricht.

## Revendications

1. Procédé permettant de délivrer un contenu marketing ciblé à un utilisateur d'un dispositif mobile (105) dans une station de transport,
par un serveur (110), comprenant :
le déclenchement, par un dispositif de suivi, externe au dispositif mobile de l'utilisateur et situé au niveau de la station de transport, du dispositif mobile de l'utilisateur ;
la réception, par le serveur, des informations en provenance du dispositif mobile de l'utilisateur (105) en réponse au déclenchement,
lesdites informations identifiant un contexte par rapport au dispositif de suivi (115) ;
l'identification, par le serveur, d'au moins un programme de campagne marketing dans le serveur associé au dispositif de suivi ;
l'application, par le serveur, des conditions du programme de campagne marketing identifié au contexte reçu en provenance du dispositif mobile de l'utilisateur ; la détermination, par le serveur, qu'un transport suivant arrive après un intervalle de temps suffisamment grand ;
sur la base de l'application des conditions et de ladite détermination, la fourniture sélective, par le serveur, du contenu marketing ciblé associé au programme de campagne marketing identifié, au dispositif mobile de l'utilisateur ; entraînant l'ouverture, par le serveur, sur l'appareil mobile de l'utilisateur, d'une application de billetterie mobile d'une agence de transport ; et
l'entrainement, par le serveur, de l'application de billetterie mobile à générer une invitation à
acheter des billets de transport qui sont identifiés sur la base des informations relatives au transport de l'application de billetterie mobile,
ledit contenu fourni et ladite invitation à acheter des billets de transport étant intégrés dans les informations relatives au transport.

2. Procédé selon la revendication 1, ledit contexte comprenant des informations identifiant le dispositif mobile de l'utilisateur (105).

3. Procédé selon la revendication 2, ledit contexte comprenant des informations d'identification de balise.

4. Procédé selon la revendication 1, ledit dispositif de suivi (115) étant une balise Bluetooth basse énergie.

5. Procédé selon la revendication 1, ledit dispositif de suivi (115) étant une barrière géographique.

6. Procédé selon la revendication 5, ledit contexte comprenant des paramètres associés à la barrière géographique, les paramètres comprenant une latitude sud-ouest, une longitude sud-ouest, une latitude nord-est et une longitude nord-est.

7. Procédé selon la revendication 1, lesdites conditions pour le programme de campagne marketing identifié comprenant des restrictions temporelles pour la fourniture d'un contenu marketing, de sorte que le serveur (110) fournisse sélectivement un contenu marketing ciblé lors de la réception d'informations en provenance d'un dispositif mobile de l'utilisateur (105) à une date et/ou une heure qui correspond aux restrictions temporelles.

8. Procédé selon la revendication 1, ladite étape de fourniture sélective de contenu marketing ciblé
comprenant en outre le rendu d'une image HTML sur un écran d'affichage du dispositif mobile de l'utilisateur (105) sur la base du HTML brut stocké sur le serveur pour le programme de campagne marketing identifié.

9. Procédé selon la revendication 1, lesdites conditions de la campagne marketing identifiée comprenant une plage de distance et lesdites informations reçues en provenance d'un dispositif mobile de l'utilisateur (105) comprenant une indication de la distance entre le dispositif mobile de l'utilisateur et le dispositif de suivi, de sorte que le serveur fournisse sélectivement un contenu marketing ciblé lors de la détermination que le dispositif mobile de l'utilisateur est dans les limites d'une distance du dispositif de suivi qui correspond aux conditions de la campagne marketing identifiée.
